Europäisches Patentamt

European Patent Office

Office européen des brevets

(19)

(11) Veröffentlichungsnummer : **0 345 576 B1**

(12) # EUROPÄISCHE PATENTSCHRIFT

(45) Veröffentlichungstag der Patentschrift :
08.07.92 Patentblatt 92/28

(51) Int. Cl.$^5$ : **C01G 37/02, B01J 2/02,
C09C 3/04, C04B 20/00**

(21) Anmeldenummer : **89109604.2**

(22) Anmeldetag : **27.05.89**

(54) **Verbessertes Chromoxidgrün, Verfahren zu seiner Herstellung und dessen Verwendung.**

(30) Priorität : **10.06.88 DE 3819779**

(43) Veröffentlichungstag der Anmeldung :
**13.12.89 Patentblatt 89/50**

(45) Bekanntmachung des Hinweises auf die
Patenterteilung :
**08.07.92 Patentblatt 92/28**

(84) Benannte Vertragsstaaten :
**AT DE FR GB IT NL**

(56) Entgegenhaltungen :
**EP-A- 0 035 751**

(56) Entgegenhaltungen :
**DE-B- 1 278 411
FR-A- 2 227 302
CHEMICAL ABSTRACTS, Band 106, Nr. 14,
April 1987, Seite 315, Zusammenfassung Nr.
107059k, Columbus, Ohio, US;**

(73) Patentinhaber : **BAYER AG
W-5090 Leverkusen 1 Bayerwerk (DE)**

(72) Erfinder : **Rademachers, Jakob, Dr.
Hoeninghausstrasse 34
W-4150 Krefeld 12 (DE)**
Erfinder : **Höfs, Hans-Ulrich, Dr.
Buschstrasse 149
W-4150 Krefeld 1 (DE)**

**Beschreibung**

Die vorliegende Erfindung betrifft ein verbessertes Chromoxidgrün, Verfahren zu seiner Herstellung und seiner Verwendung.

Chromoxidgrün stellt ein wichtiges anorganisches Produkt dar. Es wird insbesondere dank der Farbechtheit und der thermischen Beständigkeit sowohl als Farbpigment als auch als Ausgangsmaterial zur Herstellung von Feuerfeststeinen eingesetzt. Auch ist Chromoxid als Rohstoff bei der Gewinnung von Chrommetall und Chromkarbid bekannt. Wegen der hohen Härte des im Korundgitter kristallisierenden Chromoxids dient es ebenfalls in unterschiedlichen Einstellungen als Polier- oder Schleifmittel.

Großtechnisch wird Chromoxid durch Reduktion von Alkalichromaten mit Schwefel, schwefelhaltigen Verbindungen, Kohlenstoff oder kohlenstoffhaltigen Verbindungen oder mit Wasserstoff bei Temperaturen um 1.000°C hergestellt. Das nach Auswaschen der Salze getrocknete Chromoxidgrün gelangt üblicherweise als gemahlenes Pulver in den Handel.

Die Handhabung des Pulvers wird bei der Weiterverarbeitung durch Staubbildung und schlechtes Fließverhalten erschwert, was sich insbesondere bei Dosier- und Mischvorgängen negativ bemerkbar macht.

Von der weiterverarbeitenden Industrie wird deshalb ein Chromoxidgrün gewünscht, das diese Nachteile nicht aufweist.

Aufgabe der vorliegenden Erfindung ist es, verbessertes Chromoxidgrün zur Verfügung zu stellen, welches die beschriebenen Nachteile nicht aufweist.

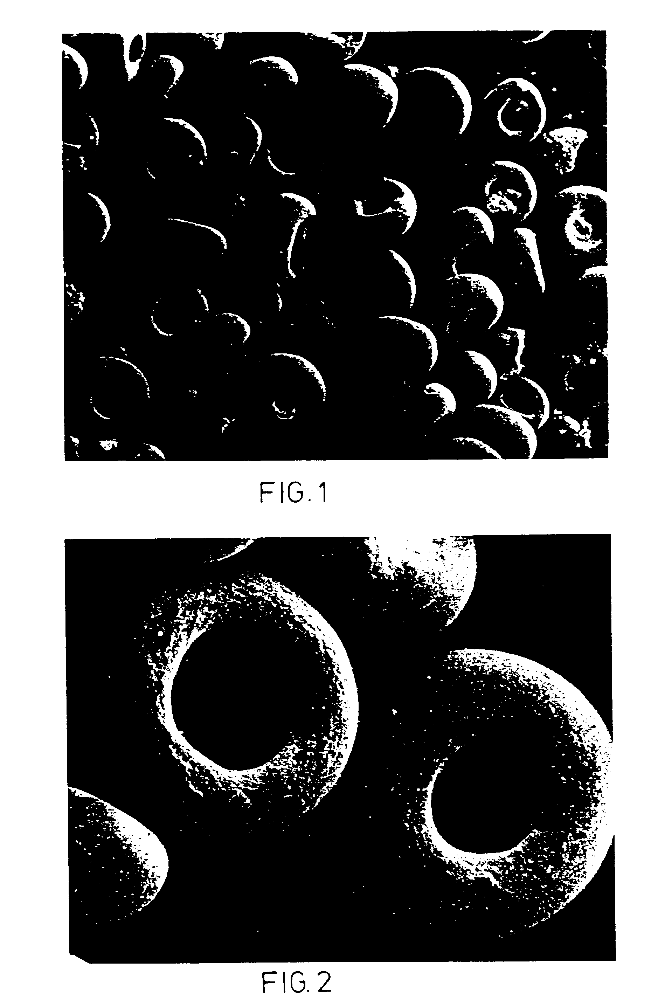

Es wurde nun gefunden, daß diese Anforderungen erfüllt werden durch ein Chromoxidgrün, welches zu mehr als der Hälfte Ring- oder Reifenform aufweist. Diese weisen bevorzugt einen inneren freien Durchmesser von 0,01 bis 0,5 mm und einen äußeren Durchmesser von 0,05 bis 1,0 auf (Fig. 1 und 2). Dieses Chromoxidgrün, das Gegenstand dieser Erfindung ist, zeichnet sich dadurch aus, daß es in Mischungen mit feinteiligen Metalloxiden, z. B. Aluminium- oder Magnesiumoxid, weniger zu Entmischungen neigt, da hier dies freie Volumen innerhalb der aus Chromoxidgrün bestehenden Ringe oder Reifen mit dem feinteiligeren Metalloxid ausgefüllt werden kann.

Auch ist dieses Chromoxidgrün in flüssiger Phase leichter zu dispergieren als kugelförmiges Material, da hier größere Angriffsflächen vorhanden sind, so daß die Zerkleinerung durch die Rührwerkzeuge erleichtert wird.

Gegenstand dieser Erfindung ist auch ein Verfahren zur Herstellung des erfindungsgemäßen Chromoxidgrüns.

Dieses Verfahren ist dadurch gekennzeichnet, daß man eine wäßrige Chromoxidgrün-Suspension über eine Flüssigkeitsdruckdüse so in einem Sprühtrockner verdüst, daß die in den Trockenraum austretende Suspension in Rotation versetzt wird. Die Suspension kann beispielsweise durch tangentiale Drallschlitze im Umlaufraum der Düse in Rotation versetzt werden.

Die Konzentration der Chromoxid-Suspension sollte zwischen 40 und 80 Gew.-%, vorzugsweise zwischen 50 und 70 Gew.-%, liegen. Die optimale Primärteilchengröße des eingesetzten Chromoxidgrüns liegt zwischen 0,05 bis 5,0 µm, vorzugsweise zwischen 0,1 und 1,0 µm. Die BET-Oberfläche, gemessen nach DIN 66 131, Abschnitt 6, Okt. 1973 (nach Ausheizen im Stickstoffstrom bei 130°C, Adsorption bei der Temperatur des flüssigen Stickstoffs, 5 Punkt-Methode, Annahme des Flächenbedarfs einer Stickstoffmolekel von 0,162 nm$^2$) sollte 1 bis 20 m$^2$/g betragen.

In einer bevorzugten Ausführungsform, die zu besonders ausgeprägten Ringen oder Reifen führt, wird der Chromoxid-Suspension - bezogen auf Chromoxidgrün - 0,1 bis 2,0 Gew.-%, insbesondere 0,2 bis 1,0 Gew.-%, eines Dispergierhilfsmittels, z. B. eines Alkali- oder Ammoniumsalzes einer Polyacrylsäure, einer Polyphosphorsäure oder einer Ligninsulfonsäure zugesetzt.

Überraschenderweise werden nach dem erfindungsgemäßen Verfahren und bei Einsatz von Chromoxid-Suspensionen die beschriebenen Ringe und Reifen in überwiegender Mehrzahl erhalten. Bei Einsatz anderer anorganischer Pigmente, z. B. Eisenoxid, Eisenoxidhydroxid, Titandioxid oder Zinkoxid, konnten die erfindungsgemäßen Ringe oder Reifen nicht beobachtet werden. Es wurden vielmehr die bekannten kugelförmigen Teilchen erhalten.

Für den Sprühtrocknungsschritt kann sowohl fertiges Chromoxidgrün als Pulver in wäßriger Suspension als auch gewaschener Filterkuchen aus dem Produktionsprozeß eingesetzt werden.

Zur Zerstäubung von Pigmentsuspensionen werden normalerweise beim Sprühtrocknungsprozeß Zerstäuberscheiben eingesetzt. Doch sind auch Düsen für die feine Verteilung der Suspension im Sprühtrockner bekannt geworden. Meist werden hierbei Zweistoffdüsen unter Zuhilfenahme eines Preßgases, z. B. Luft oder Dampf, eingesetzt. Einstoffdüsen, die unter dem eigenen Flüssigkeitsdruck die feine Verteilung der eingesetzten Suspensionen bewirken, werden ebenfalls bei der Sprühtrocknung verwendet. Erfindungsgemäß erhält man nur dann das verbesserte Chromoxidgrün in Form von Ringen oder Reifen, wenn eine Flüssigkeitsdruck-

2

düse eingesetzt wird, vorzugsweise mit einer Zerstäubungsform, die einen kreisförmigen Hohlkegel darstellt. Dabei wird die Flüssigkeit der Düse zentrisch zugeführt, durch tangentiale Drallschlitze im Umlaufsraum in hohe Geschwindigkeit versetzt und nach dem Austritt durch die Mündungsbohrung zerstäubt. Vorzugsweise werden Düsen mit einem Sprühwinkel von 15 bis 60° eingesetzt. Die Bohrung richtet sich nach dem gewünschten Durchsatz. Sie kann zwischen 0,1 und 20 mm liegen. Ebenfalls kann der Flüssigkeitsvordruck von 0,25 bis 10 bar betragen.

Das Verfahren zur Herstellung des erfindungsgemäßen verbesserten Chromoxidgrüns kann in beliebigen geeigneten Trocknern durchgeführt werden. Hierbei ist es zweckmäßig, mit möglichst hohen Temperaturen des Trocknungsgases zu arbeiten, die bei 500°C liegen sollten. Die Gasaustrittstemperaturen sollten zur guten Wärmeausnutzung möglichst tief, bei 120 bis 180°C, gehalten werden.

Vorteilhaft ist auch die Verwendung eines Düsentrockners, der nach dem Springbrunnenprinzip arbeitet, da hier längere Verweilzeiten beim Trocknungsvorgang auftreten.

Gegenstand dieser Erfindung ist auch die Verwendung des erfindungsgemäßen Chromoxidgrüns zur Herstellung von Chrommetall, Chromkarbid, Feuerfestmaterialien, zur Einfärbung von Substraten, z. B. Betonteilen, Putzen, Lacken oder Kunststoffen und als Schleif- oder Poliermittel.

Anhand nachfolgender Beispiele soll das Verfahren näher erläutert werden; es ist jedoch darin keine Einschränkung auf die Beispiele zu sehen.

### Beispiel 1

100 kg Chromoxidgrün GN (Handelsprodukt der Bayer AG) mit einer BET-Oberfläche von 4 $m^2$/g werden mit 66 kg Wasser und 0,75 kg Polystabil-S 312-Lösung - entsprechend 0,3 kg Na-Polyacrylat - (Handelsprodukt der Chem. Fabrik Stockhausen GmbH) - homogen verrührt. Die so erhaltene Suspension wird mittels einer Exzenterschneckenpumpe in einer Menge von ca. 50 kg pro Stunde einem Sprühtrockner zugeführt, der einen Durchmesser von 1,00 m bei einer Höhe von 5,20 m im zylindrischen Teil aufweist und mit einer Flüssigkeitsdruckdüse von der Firma Gustav Schlick GmbH & Co (Typ 100, Bohrung 0,8 mm, Sprühwinkel 30°) ausgerüstet ist. Der Flüssigkeitsdruck vor der Düse wird auf 5,0 bar gehalten. Die Temperaturen der Brennergase betragen am Trocknereintritt 530°C, am Trockneraustritt 180°C. Das erhaltene Trockengut mit einem Schüttgewicht von 1,6 g/ml weist gute Fließeigenschaften auf (Auslaufzeit DIN-Becher 4 = 54 sec nach DIN 53 211), neigt nicht zum Stauben und besteht zum überwiegenden Teil (ca. 90 %) aus Ringen und Reifen mit einem inneren Durchmesser von 40 bis 120 $\mu$m und einem äußeren Durchmesser von 100 bis 250 $\mu$m.

### Beispiel 2

100 kg Chromoxidgrün-Versuchsprodukt PK 5304 (Handelsprodukt der Bayer AG) mit einer BET von etwa 10 $m^2$/g wurden wie in Beispiel 1 angemischt und getrocknet. Das erhaltene Trockengut bestand ebenfalls zum überwiegenden Teil aus Ringen und Reifen. Das Schüttgewicht lag bei 1,39 g/ml, die Auslaufzeit aus dem DIN-Becher 4 bei 55 sec.

### Beispiel 3

133 kg Filterkuchen mit einem Feststoffgehalt von 75 Gew.-% geglühten und gewaschenen Rohmaterials für Chromoxidgrün GX (Handelsprodukt der Bayer AG) wurden mit 33 kg Wasser auf einen Feststoffgehalt von 60 Gew.-% verdünnt und weiter, wie in Beispiel 1 angegeben, behandelt. Es resultierte ein fließfähiges, nicht staubendes Trockenmaterial mit gleichen Abmessungen der Ringe und Reifen wie aus Beispiel 1.

### Vergleichsbeispiel 1

100 kg Eisenoxidgelb Bayferrox 920 (Handelsprodukt der Bayer AG) wurden wie in Beispiel 1 behandelt, mit Ausnahme der Feststoffkonzentration, die wegen der nötigen Pumpfähigkeit der Suspension auf 40 Gew.-% eingestellt wurde. Als Trockenmaterial wurden die aus der Sprühtrocknung bekannten typischen, kugelförmigen Teilchen mit Einbuchtungen erhalten (Durchmesser zwischen 100 und 300 $\mu$m).

### Vergleichsbeispiel 2

100 kg Bayertitan R-FK 2 (Titandioxidpigment der Bayer AG) wurden mit 66 kg Wasser wie in Beispiel 1 homogen vermischt, mit der gleichen Menge Polystabil S 312-Lösung versetzt und anschließend getrocknet. Das erhaltene Trockenmaterial bestand aus Kügelchen mit Einbuchtungen. Der Durchmesser der Kügelchen lag zwischen 50 und 300 µm.

Vergleichsbeispiel 3

100 kg Zinkoxid aktiv (Handelsprodukt der Bayer AG) wurden mit 300 kg Wasser zu einer Paste vermischt, mit 0,75 Gew.-% Polystabil S 312-Lösung versetzt und wie in Beispiel 1 weiterverarbeitet. Wir erhielten Kügelchen mit Einbuchtungen. Der Durchmesser betrug 50 bis 200 µm.

**Patentansprüche**

1. Chromoxidgrün, dadurch gekennzeichnet, daß die Teilchen zu mehr als der Hälfte aus Ringen oder Reifen bestehen, wobei die Ringe oder Reifen einen inneren freien Durchmesser von 0,01 bis 0,5 mm und einen äußeren Durchmesser von 0,05 bis 1,0 mm aufweisen.

2. Verfahren zur Herstellung des Chromoxidgrüns gemäß Anspruch 1, daß eine Chromoxid-Suspension über eine Flüssigkeitsdruckdüse so in einem Sprühtrockner verdüst wird, daß die in den Trockenraum austretende Suspension in Rotation versetzt wird.

3. Verfahren gemäß Anspruche 2, dadurch gekennzeichnet, daß die Flüssigkeitsdruckdüse eine kreisförmige Hohlkegelzerstäubungscharakteristik aufweist.

4. Verfahren gemäß einem der Ansprüche 2 oder 3, dadurch gekennzeichnet, daß die zur Trocknung gelangende Chromoxidgrün-Suspension 40 bis 80 Gew.-%, vorzugsweise 50 bis 70 Gew.-%, Chromoxid aufweist.

5. Verfahren gemäß einem oder mehreren der Ansprüche 2 bis 4, dadurch gekennzeichnet, daß die BET-Oberfläche des eingesetzten Chromoxidgrüns zwischen 1 und 20 m²/g liegt.

6. Verfahren gemäß einem oder mehreren der Ansprüche 2 bis 5, dadurch gekennzeichnet, daß der wäßrigen Chromoxidgrün-Suspension 0,1 bis 2,0 Gew.-%, vorzugsweise 0,2 bis 1,0 Gew.-%, eines Dispergierhilfsmittels, bezogen auf Chromoxidgrün, zugesetzt wird.

7. Verfahren gemäß Anspruch 6, dadurch gekennzeichnet, daß als Dispergierhilfsmittel Alkali- oder Ammoniumpolyacrylat und/oder ein Alkali- oder Ammoniumpolyphosphat und/oder ein Alkali- oder Ammoniumligninsulfonat eingesetzt wird.

8. Verwendung von Chromoxidgrün gemäß einem oder mehreren der Ansprüche 1 bis 7 zur Herstellung von Chrommetall, Chromkarbid, Feuerfestmaterialien, zur Einfärbung von Betonteilen, Putzen, Lacken oder Kunststoffen und als Schleif- oder Poliermittel.

**Claims**

1. Chromium oxide green, characterized in that more than half the particles consist predominantly of rings or tires, the rings or tires having an internal free diameter of 0.01 to 0.5 mm and an external diameter of 0.05 to 1.0 mm.

2. A process for the production of the chromium oxide green claimed in claim 1, characterized in that a chromium oxide suspension is sprayed through a liquid pressure nozzle into a spray dryer in such a way that the suspension issuing into the drying space is set rotating.

3. A process as claimed in claim 2, characterized in that the liquid pressure nozzle has a circular hollow cone spray characteristic.

4. A process as claimed in claim 2 or 3, characterized in that the chromium oxide green suspension to be dried contains 40 to 80% by weight and preferably 50 to 70% by weight chromium oxide.

5. A process as claimed in one or more of claims 2 to 4, characterized in that the chromium oxide green used has a BET surface of 1 to 20 m²/g.

6. A process as claimed in one or more of claims 2 to 5, characterized in that 0.1 to 2.0% by weight and preferably 0.2 to 1.0% by weight of a dispersion aid, based on chromium oxide green, is added to the aqueous chromium oxide green suspension.

7. A process as claimed in claim 6, characterized in that alkali or ammonium polyacrylate and/or an alkali metal or ammonium polyphosphate and/or an alkali metal or ammonium lignin sulfonate is used as the dispersion aid.

8. The use of the chromium oxide green claimed in one or more of claims 1 to 7 for the production of chromium metal, chromium carbide, refractory materials, for the pigmenting of concrete parts, plasters, paints or plastics and as an abrasive or polish.

**Revendications**

1. Oxyde de chrome vert, caractérisé en ce que les particules consistent pour plus de la moitié en anneaux dont le diamètre intérieur libre va de 0,01 à 0,5 mm et le diamètre extérieur de 0,05 à 1,0 mm.

2. Procédé de préparation de l'oxyde de chrome vert de la revendication 1, dans lequel on pulvérise une suspension d'oxyde de chrome par un gicleur à pression de liquide dans un séchoir-atomiseur en sorte que la suspension sortant dans la chambre de séchage soit mise en rotation.

3. Procédé selon la revendication 2, caractérisé en ce que le gicleur à pression de liquide a une caractéristique d'atomisation en cône creux à section circulaire.

4. Procédé selon l'une des revendications 2 ou 3, caractérisé en ce que la suspension d'oxyde de chrome vert envoyée au séchage contient de 40 à 80% en poids, de préférence de 50 à 70% en poids d'oxyde de chrome.

5. Procédé selon une ou plusieurs des revendications 2 à 4, caractérisé en ce que la surface BET de l'oxyde de chrome vert mis en oeuvre va de 1 à 20 m²/g.

6. Procédé selon une ou plusieurs des revendications 2 à 5, caractérisé en ce que la suspension aqueuse d'oxyde de chrome vert est additionnée de 0,1 à 2,0% en poids, de préférence de 0,2 à 1,0% en poids, par rapport à l'oxyde de chrome vert, d'un produit auxiliaire de dispersion.

7. Procédé selon la revendication 6, caractérisé en ce que l'on utilise en tant que produit auxiliaire de dispersion un polyacrylate alcalin ou d'ammonium et/ou un polyphosphate alcalin ou d'ammonium et/ou un lignine-sulfonate alcalin ou d'ammonium.

8. Utilisation d'un oxyde de chrome vert selon une ou plusieurs des revendications 1 à 7 pour la fabrication du chrome métallique, du carbure de chrome, de matériaux réfractaires, pour la coloration de pièces de béton, de mastics, de vernis ou de résines synthétiques et en tant qu'agents de meulage ou de polissage.

FIG. 1

FIG. 2